# EUROPEAN PATENT SPECIFICATION

(11) **EP 0 458 722 B1**
(45) Date of publication and mention of the grant of the patent: **13.07.1994**
(21) Application number: 91500043.4
(22) Date of filing: 14.05.1991
(51) Int. Cl.: B65G 37/02, B65G 1/04, B23Q 7/14

(54) **An assembly for programmed controlled handling and transporting of boxes, containers or the like**
Aufbau für programmgesteuertes Behandeln und Transportieren von Gefässen und Behältern oder ähnlichen
Assemblage pour la manipulation et le transport sous commande programmée de boîtes, récipients ou similaire

(30) Priority: 22.05.1990 JP 132427/90
(43) Date of publication of application: 27.11.1991
(73) Proprietor: INVESTRONICA S.A., E-28045 Madrid-7 (ES)
(72) Inventor: Galan, Mario Andrada, ES-28008 Madrid (ES); Cristos, Juan Carlos, ES-28042 Madrid (ES); Diaz-Zorita, Fernando, ES-28035 Madrid (ES)
(74) Representative: Puschmann, Heinz H.

(56) References cited:
- EP-A- 0 169 156
- EP-A- 0 333 891
- DE-A- 3 614 165
- GB-A- 2 174 686
- US-A- 3 741 369

## Description

### FIELD OF THE INVENTION

The present invention relates to a system for programmed controlled handling and transporting boxes, containers or the like.

### BACKGROUND OF THE INVENTION

The main object of this invention is the automatic handling and transporting of boxes, containers or the like and it is more specifically an apparatus able of moving containers from one place to another, by example, in a warehouse or workshop following the instructions of a host computer.

The application of this invention in a factory allows the automatic transport of the product object of the manufacturing process along the different workstations in which the manufacturing operations are performed. An external computer communicated with one or several apparatus via radio or infrared rays, and with the workstations by any means, can allow the control and management at real time of every resource involved in the production process (machines at workstations, operators, the product itself and its components) and the time in which each resource is involved in each operation of the process. In this way, it is possible to optimize the use of such resources in relation with the requirements of the production. Components can also be handled by the same apparatus that would carry them to the manufacturing line straight from their storage place, allowing them the control and management of the warehouse itself. Similarly, it also can be applied in final product warehouses, always with the condition that the product has to be compatible with the apparatus or with the boxes handled by the apparatus.

This application is nowadays solved on the basis of a continuous transport system with the necessary control means. Being rather fulfilled from the point of view of what can be required in a nowadays factory, these transport systems have a great dependency upon the characteristics of the factory for their installation, they are not quite flexible with respect to future changes in their configuration, and they impose obvious restrictions for the movement of people and/or machines along their installation area. These reasons, among others, have caused the application of discontinuous transport means, like autoguided vehicles, as the medium of transport. The EP O 169 156 describes an apparatus able to handle containers and the articles contained in the containers, inside a warehouse, allowing the automatization of the loading and unloading operations of the articles either on the storage points or in the warehouse input and output areas. The feasibility of such application is based on certain types of marks placed beside every storage position which indicate to the vehicle the actual position of the storage point, and then the vehicle can make the final positioning with respect the storage point. Another characteristic of said apparatus and other existing autoguided vehicles with on board manipulator is either the need of specific containers or the need of specific requirement for the basis where the container or the like must be handled for instance, the use of guides between containers and their supports.

It is an objective of this invention on the one hand to avoid the need of any external marks beside every handling point, and on the other hand to handle commercial containers, which meet the only requirement that their overall dimensions are under certain limits, from and to external supports having a more or less horizontal flat surface and whose distances to the vehicle and height to the floor are under certain limits.

There is also the EPA 0333 891 which refers to an apparatus for automatically handling clothes on hangers, and although the basis of the vehicle is similar to the one of this application the manipulators are specifically conceived to very different objects, as they are containers or boxes and clothes on hangers.

### SUMMARY OF THE INVENTION

The present invention resides in a method and apparatus to automate the handling of boxes, containers or products similarly shaped, in a workshop or/and a warehouse and then to allow the computerized control and management of the workshop or the warehouse or both of them. The apparatus includes a manipulator able to take a container or the like, from an external support and place it on a container store also included in the apparatus and to take a container from this container store and place it on an external support, for different heights of the container position, either in the container store or on the external support, with respect the floor, and being placed this external support either to the right or to the left of the apparatus.

An autoguided vehicle, as the physical support of the manipulator, provides the ability needed for the displacement along the floor. The control of the necessary movements, according to the method of the invention is done by electronic devices, including an on board computer. A system of communication with a host computer allows the exchange of information needed to manage the operations of an apparatus or a set of them. The host computer is also communicated with external stations, like workstations in a workshop or input and output areas, in a warehouse, in order to exchange the necessary information to achieve the control of the apparatus, the operators, the machines and the production.

The assembly further has a manipulator apparatus comprising two columns symmetrically placed and stiffly joined on both sides of the vehicle and a stiff three-dimensional frame which can move up and down along the columns. An horizontal extendible arm is vertically hinged to a point of the stiff frame out of the vertical plane formed by the columns, in such a way that the arm can rotate around a vertical axis placed in the symmetrical vertical plane of the apparatus, and extend toward both sides of the apparatus without interference with the columns.

A clamp, that can move from one end of the retracted arm to the other end while expanding, takes the containers or the like from, or carries them to, the external support or the on board container store.

### BRIEF DESCRIPTION OF THE DRAWINGS

Fig.1 is a plant view of a computer controlled workshop and warehouse including apparatus like that of this invention as medium of transport.

Fig. 2 is a perspective view of a standard workstation with its main components.

Fig.3 is a perspective view of a standard commercial container with a code affixed to it.

Fig.4 is a perspective view of an apparatus like that of this invention, where it may be seen the main parts of the apparatus and the main accessory elements.

Fig. 5 is a perspective view of the preferred clamp assembly including its main components.

### DETAILED DESCRIPTION OF PREFERRED EMBODIMENT

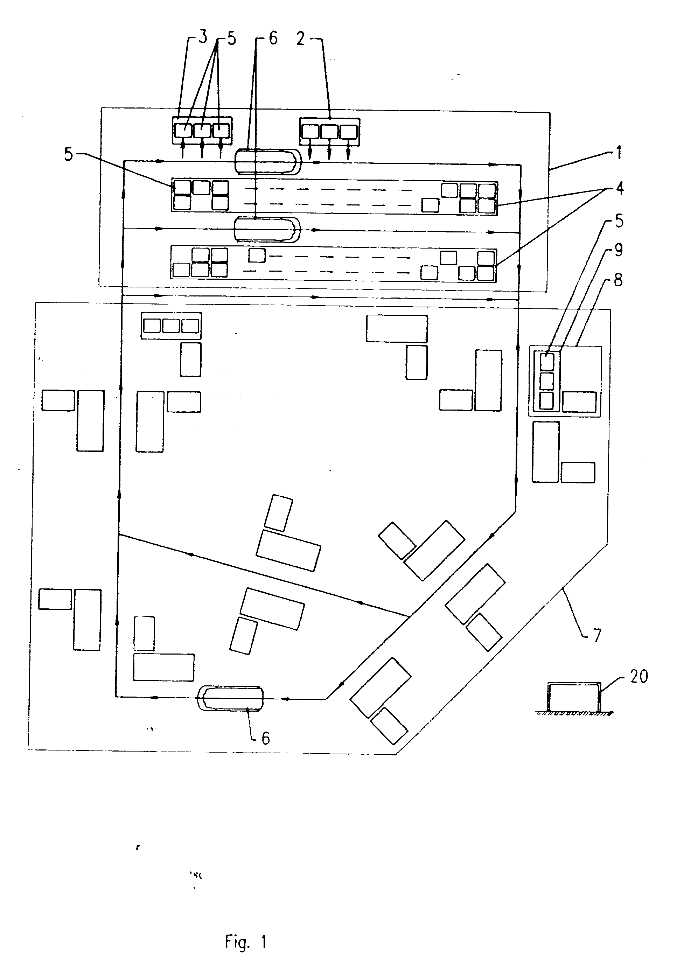

A preferred embodiment according to the present invention is described below with reference to the figures. In fig. 1 it can be seen the main parts that allow the functioning of a storage and manufacturing control system which includes automatic handling and transport by means of autoguided and robotized vehicles.

The storage area 1 includes an input station 2 for components to be stored and an output station 3 where the finished products are carried when required. The components are carried from the input station to the storage racks 4 in containers 5 by the vehicle 6. When the components are required from the manufacturing area 7 the vehicle takes their related containers from the storage area and carry them to the workstations 8 following a programmed route which takes into account the operation sequence of the manufacturing process, the balance of workstations or the need of production, among others.

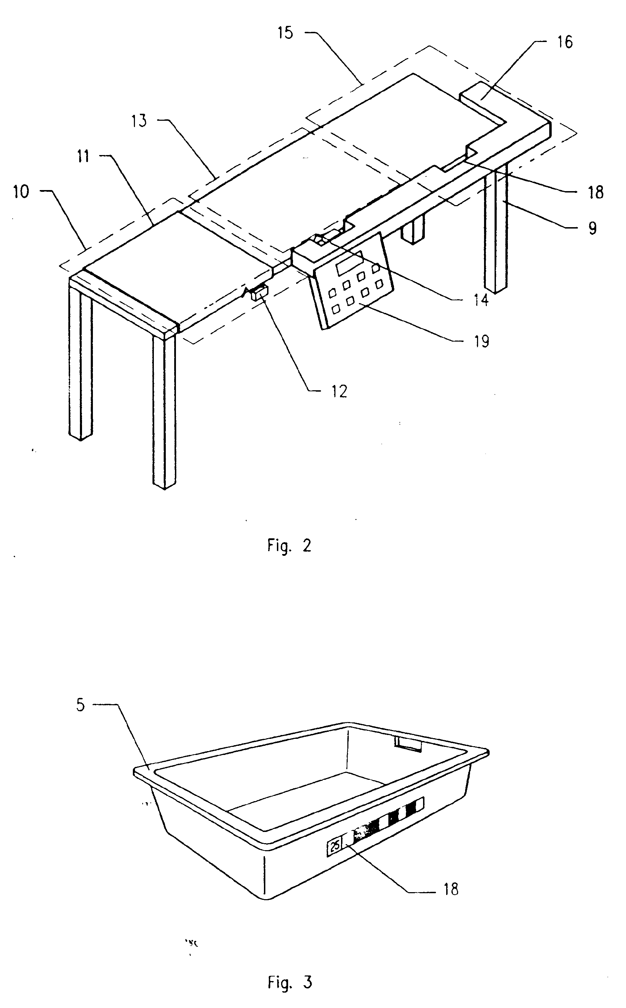

The workstations 8 include, besides the necessary resources to make the required operation, a table 9 to receive the containers, to allow the handling of the containers in the workstation and to allow the containers to be taken by the vehicle. In fig. 2, it can be seen the table 9 which includes in the container reception area 10 a container presence detector, which detects the presence of a container or any other object in any point of this area for example via a spring plate 11 and a microswitch 12. The work area 13 is where the container stays while the necessary operations over the components are made and then they return to the container transformed or joined in assemblies. The work area includes another container presence detector, like a microswitch 14, to know the time that the container remained there and therefore the related operation time. After the operation is finished, the container is moved to the output area 15 where the piece 16 determines the container right positioning. The piece 16 includes a reader 17 able to read a code affixed to the container once the container is stopped in front of the reader. Every information given by the container detectors and reader is gathered by a microterminal 19 which exchanges information with a host computer 20 via a communication system. The microterminal includes means to allow also the exchange of information with an operator. In this way, the host computer can automatically know the state of every container in every workstation and exchange information with the operators.

A workstation can have more than one reception, work or output area, or be formed by only reception areas, as the output station 3, or by only output areas, as the input station 2, and so on.

The identification code and reader are specifically conceived for this application and based on the use of infrared sensors able to detect a dark or bright surface at some distance in front of them. The reader consists of a set of these sensors placed in line. The code consists of a set of bright and dark consecutive areas according to a binary code, being the width of such areas the same as the distance **d** between two consecutive reader sensors. The code 18 is affixed to the container, see fig.3, in such a position that when the container is correctly positioned on the workstation output area, each code area is in front of the corresponding reader sensor and then a reading can be made. In this way the sum of the permissible position errors of the code with respect the container and this one with respect the reader would be equal to ± d/2, in the horizontal code direction and ± h/2 in vertical direction, being **h** the height of the code areas.

The preferred code for this application consists of eight dark or bright areas and the corresponding decimal (or octal, as desired) number drawn at a side, to visually identify the code. A bright area means 1 (one) and then a dark area means 0 (zero), although it can be the contrary. The two areas beside the decimal number are the redundancy code to avoid wrong readings, being the remaining six areas the actual code number. The redundancy code is conceived in such a way that avoids wrong readings due to a defect on an area or on two consecutive areas, or due to an external infrared source which can affect to the reader, among others. For that, the sum of the binary numbers corresponding to the alternate areas of the full code must result odd. In the example of fig. 3, the first area starting on the right, is 1 (one) as they are the third and fifth areas and therefore the seventh area must be 0 (zero) to sum 3 (three) which is odd while the second fourth and sixth areas are 0 (zero) and therefore the eighth area must be 1 (one), to sum also odd. The maximum code number will be 64 in decimal or 77 in the basis eight system, as it can be easily calculated, and therefore by combining two codes they can be obtained 64 x 64 = 4096 different double codes, and by combining three codes, we can obtain 4096 x 64 = 262144 different triple codes, and so on. Therefore, a number of codes as big as desired can be obtained by the combinations of only 64 single codes.

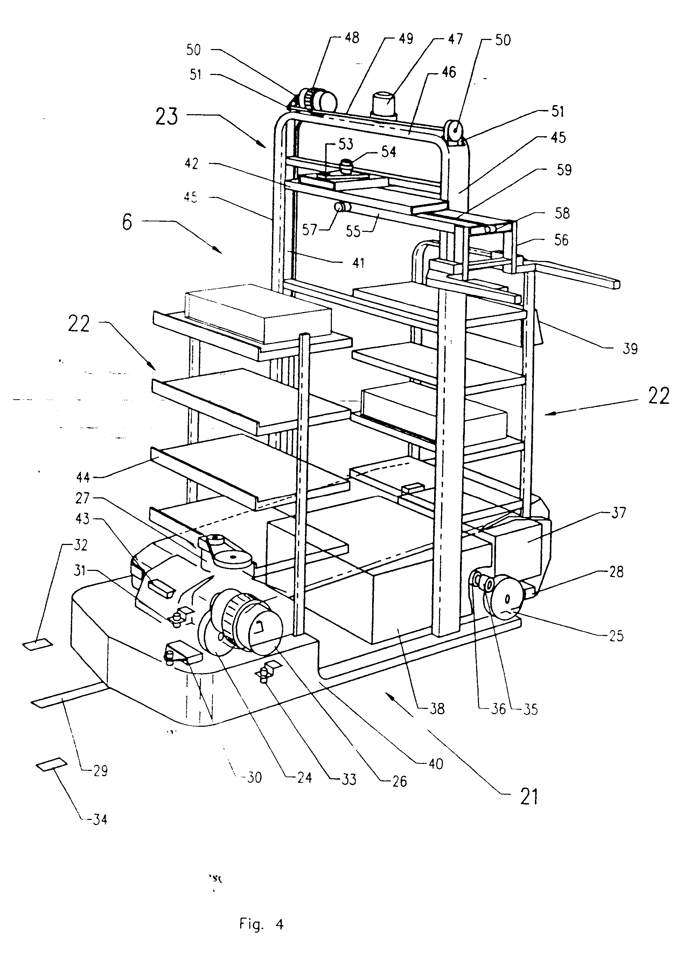

In fig. 4, it can be seen the main parts of the apparatus generally designated as 6, the basis of which is the autoguided vehicle 21, which supports two container supports 22 and the manipulator 23.

The autoguided vehicle stands on three wheels 24 and 25, wheel 24 is in the front and the two wheels 25 are in the back. The front wheel 24 does the traction and driving function using two DC motors 26 and 27 with reduces and encoders, controlled in position by known electronic devices and the computer on board. The traction motor also acts as a brake when the security system is on. The back wheels 25 could also be stopped by the brake device 28 when activated by the security system. The front wheel 24 stands on a metallic strip 29, of adequate magnetic properties, fixed to the floor with adhesive tape. A sensor 30, placed before the front wheel, detects its relative position with respect to the metallic strip 29 and gives the signals needed for activating the driving motor, allowing the alignment of the vehicle with the strip. Sensor 31 detects marks 32 on the floor, mainly bits of strip such as 29 of a specific length, which signal a curve or a side tracking at a distance from the mark.

Another sensor 33, similar to 31, detects other marks 34, similar to 32 placed in such a way that divide the circuit in sectors of determined length.

A friction wheel 35 rests on one of the two back wheels 25 and is connected to an encoder 36 of a determined number of pulses per turn, relating, in this way, the number of pulses measured by the adequate electronic, with the distance travelled by the wheel 25, and therefore by the vehicle when a straight path. Distances are also measured by the traction wheel, which has the necessary control means as aforementioned, but said wheel can slide during accelerations as the traction loads are transmitted by friction. However, the horizontal loads on the back wheels are much smaller as they only withstand vertical loads, and then the possibility of sliding is also much smaller. Therefore, the errors in distance measured by the traction wheel 24, due to a possible sliding, can be avoided with the aforementioned assembly.

The sensor 33 and marks 34 can be used to calibrate both the traction motor and the precision of the assembly of wheel 35 and encoder 36, to know the exact position of the vehicle on the circuit, and as a support for controlling,the traffic, for example, preventing a vehicle to come in a section where there is another vehicle.

The vehicle communication equipment consists in a wireless transmitter-receiver 47. The board computer and the electronic for the control of the apparatus are placed in a central module 37. The necessary energy for the functioning of the vehicle is supplied by the batteries 38, that can be automatically recharged.

A microterminal 39 allows operators to initialize the vehicle and to communicate and exchange data with the board computer. The microterminal includes means to operate manually the vehicle.

The aim of the security system is to detect external or internal incidences which affect or could affect the current working of the apparatus, to short circuit the motors when a fail is detected, in order to enable the motors as brakes, to enable the brake of the back wheels and also to tell about the fail to the host computer through the communication system. It is a part of the security system a flexible strip or foam piece 40 which surrounds the vehicle and whose strain beyond a certain limit is detected by adequate sensors and then the security system is activated. Similar sensors have the same function near the end of the actuation range for the driving system and the movable frame 41 and rotating arm 42. The motors are provided with encoders, so they can be controlled in position. This allows to enable the security system when there is a lag of phase between the actual position and the ordered one. The security system also includes a proximity sensor 43 able to detect obstacles, for example via infrared rays or ultrasounds, at some distance in front of the vehicle. The signals of this sensor will be adequately treated to stop the vehicle before crashing and continue the movement once the obstacle is removed.

The container support 22 consists of two similar shelves, one placed on the back and the other on the front side of the vehicle, that contain the trays 44 to support the containers. The free space between the two shelves allows the container to be placed on, or removed from, the corresponding trays by the manipulator 23, which is also placed in this free space.
The manipulator includes two similar columns 45 stiffly joined by their bottom to the vehicle frame and by their top one another through a beam 46. The columns have an adequate profile to withstand the working loads and guide the frame 41, that can be moved up and down by a vertical system of movement, formed for example by the motor 48, the torque shaft 49, pulleys 50 and the toothed belts 51. The extendible and rotary arm 42 is hinged to the frame 41 through a vertical shaft 53 placed on top of the frame 41, in the vertical plane of symmetry of the vehicle and at some distance from the columns, to avoid interferences with them while rotating either with container or without it. A system of movement formed for example by a motor 54, pulleys, and toothed belt can rotate the arm 42 around the vertical shaft 53, in horizontal plane. The motors 48 and 54 are controlled in position by respective encoders and the adequate electronic. Sensors, like microswitches, indicate the origin of both vertical and rotary movements.

The arm 42 has the adequate shape to withstand the working loads and guide the movable bar 55 while sliding along it. The movable bar 55 is also shaped to allow the clamp assembly 56 slide along it when acted by a system of movement formed for example, by a motor 57 and pulleys 58 fixed to the movable bar, and a toothed belt 59 fixed by one side to the arm 42 and by the other to the clamp assembly. In this way, when the motor 57 is activated it makes move the clamp assembly with respect the movable bar at the same time that this moves with respect the only rotary bar. The movement of the clamp assembly can be controlled by microswitches which detect the retracted position and the positions to place/take containers on/from the vehicle or from external support.

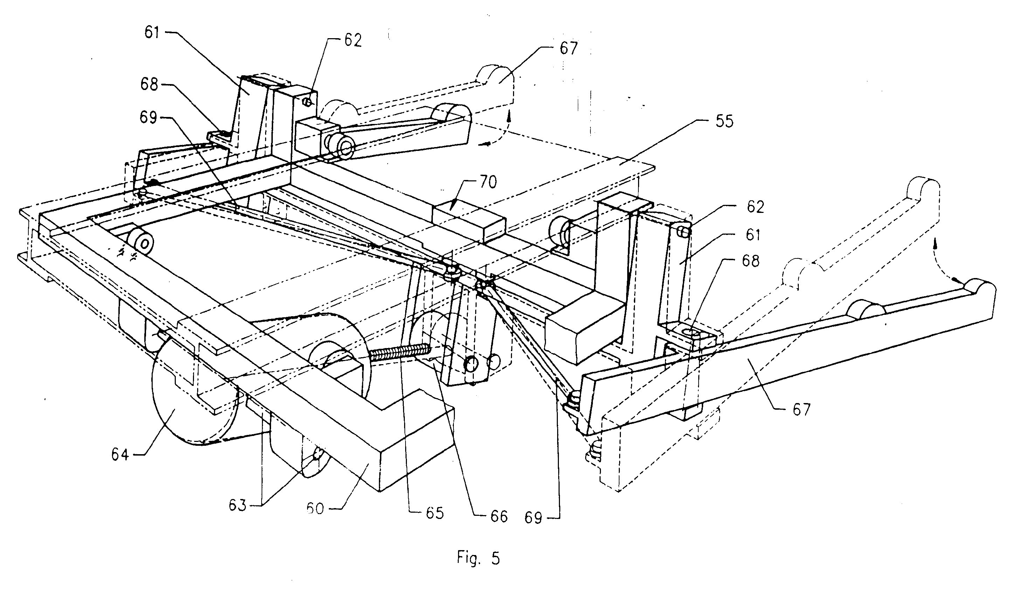

It can be seen in fig.5 the clamp assembly 56, that includes a stiff frame 60, which is supported on the guides of bar 55 through low friction pieces, and that supports the tilting frame 61 through the hinges 62 and the bar 63 which is hinged by one end to the stiff frame and by the other to the tilting frame. The bar 63 includes a mechanism which can modify the distance between both hinges, said mechanism comprising for example, a motor 64 and an endless screw 65 which screws on the nut-piece 66 that is hinged to the tilting frame, so when the motor 64 acts, the endless screw rotates in the nut-piece and the tilting frame tilts around the hinges 62. Two pieces 67 are jointed to the tilting frame through the hinges 68 and to the fixed frame by the bar 69 which has rounded joints in both ends. So, when the tilting frame tilts, the pieces 67 also tilt with it, but the jointed bar 69 makes them rotate also around the hinges 68. In this way the pieces 67 can open and lower, or close and lift at the same time, and therefore to meet the clamp function if conveniently shaped to adapt to a determined container. The relation between both combined movements can be modified by changing the position and/or length of the jointed bar 69. The open and close positions can be detected by respective microswitches placed near both ends of the endless screw. The clamp assembly is provided with a sensor 70 to detect if a container has been taken or released when required.

A clamp assembly like this one allows taking and release actions without moving other parts in vertical direction, and therefore the vertical motor 48 will only act when the clamp assembly, with or without container, is in the retracted position so that the vertical loads will be approximately centered over the vertical columns. Therefore the energy use, and then the vehicle autonomy, and the overall stiffness are improved.

With the aforementioned elements and the adequate software it can be controlled the production process in a workshop and/or a warehouse where the product can be handled by an apparatus like the one described above or contained in boxes that can be handled by said apparatus. As an example, the containers start the process, loaded with a set of components, on an input station 2 (see fig.1), where every container is identified by the readers and then the container number and its content are related by the host computer 20 which communicates with the input station. A vehicle 6 takes the containers from this station and carry them to the storage points determined by the host computer 20 and remain there until they are required from the manufacturing area. Then, the same or another vehicle takes the required-containers from their storage points and carry them to workstations 8 assigned by the host computer whose software takes into account the sequence of operations, the balance of workstations, the needs of the production, etc. Each container is placed by the manipulator on a workstation reception area 10 where the detector 12 indicates the presence of the container and communicates it through the communication system to the host computer which will not assign any other container to this workstation till the container is removed from the reception area. Once the container is placed on the work area 13 by the operator, the host computer can also know the operation time through the container detector 14, which must be activated until the container is placed on the output area 15, where it is identified again by the reader 17, and then the operation time and the following operation can be assigned to the right container. The reader also indicates the presence of the container, and can generate an acoustic or luminous signal to inform the operator if the container is not correctly readed so as to relocate it or to review the code or the reader. The host computer will decide when the container has to be removed by a vehicle. The microterminal 19 can exchange any incidence information or others between the operator and the host computer.

Once the operation cycle is finished the containers are taken from the last workstation and carried to the output station 3 or to the storage area where they will remain until required by the output station.

The general lay-out is previously known by the host computer, including the position of every workstation and storage point, whose horizontal distance to the metallic strip 29, its height with respect the floor and its distance, in the direction of the strip 29, to the nearest mark 34, must have been measured.

Once the vehicle receives the order to take a container from a workstation or a storage point, it follows a path directed by the host computer. The vehicle communicates to the host computer every mark 32, which signal a curve or a side tracking, and every mark 34, which divide the circuit in sections. In this way, the host computer knows the position of any vehicle at any time and can decide every vehicle path in order to avoid interferences, as well as every vehicle can follow their corresponding path by counting the marks 32 and 34.

The vehicle is correctly placed in position with respect the corresponding workstation or storage point by the traction motor 26 which is provided with an encoder. The board computer translates the distance from the last mark 34 in encoder pulses and the adequate electronic controls the motor movement. The free wheel 35 and encoder 36 detect possible sliding of the traction wheel and give the necessary corrections to achieve the final positioning. Then, the vertical motor 48 acts to lift the clamp assembly 56 to the required height while the motor 54 rotates the arm 42 in order to put the clamp assembly to the left or to the right, according to the position of the container to be taken, and being the clamps assembly in retracted position, with the clamps opened, during both movements. Then the motor 57 acts to move the clamp assembly towards the other end of the bar 55 while this one moves with respect the bar 42, up to reach the container position. If the container is detected by the detector 70, then the clamps close, and after the clamp assembly is retracted, the bar 42 is rotated to the back or to the front side of the vehicle, depending of the assigned container support, while the container is vertically moved up to reach the assigned tray position. Then, the clamp assembly is moved again by the motor 57 and the clamps open after the clamp assembly is positioned, releasing the container on the tray. After that, the clamp assembly is retracted again and the rotary bar 42 and frame 41 return to their original position. The container detector 70 can give continuously signals to know if the container has moved out of its correct position in the clamps along the movements. In this way the board computer can take steps to avoid further problems and inform to the host computer.

The way to take a container from the board container support and place it in a workstation or storage point is similar to the aforementioned.

## Claims

1. An assembly for programmed controlled handling of containers (5) or the like in a work place (1) having a floor, comprising a host computer (20), a set of autoguided and robotized vehicles (6), a plurality of container receiving stations (9) located on the floor of the work place and a communication system means for communicating between the host computer (20), the vehicles (6), and the article receiving stations (9); whereby the containers (5) for locating at each container receiving station (9) having a substantially flat and horizontal support surface; comprising further on board container support means (22) mounted on each vehicle (6), each on board support means (22) having a substantially flat and horizontal container support surface, each vehicle having a right and a left lateral side;
manipulator means (23) mounted on each vehicle (6) for grasping a container (5) positioned on the on board support means (22), for transporting the grasped container to a container receiving station (9) adjacent the vehicle, and for releasing the grasped container on the external container support means (5) of the adjacent container receiving station (9), and vice versa, said container receiving station (9) being adjacent either lateral side of said vehicle, wherein the flat and horizontal container support surface of the container receiving station adjacent the vehicle (6) is at a different height from the floor of the work place (1) than the flat and horizontal support surface of the on board container support means of the vehicle, characterized that each vehicle (6) having mounted thereon an on board computer (37) for communication with the host computer (20), that at least one container receiving station (9) being a work station having a receiving area (10) for receiving a container from said manipulator means (22) mounted on the vehicle (6), first means (12) for communicating with the host computer (20) mounted on said work place (1) and for detecting a container deposited on said receiving area (10), a work area (13) positioned in said work station (9) adjacent said receiving area, second means (14) for communicating with said host computer (20) and for detecting a container in the work area (13), an output area (15) positioned in said work station adjacent said work area, third means (17) for communicating with said host computer (20) and for detecting a container in the output area (15), said third means including means for reading an identification code (18) affixed to each of the container (5).

2. Assembly according claim 1, with an autoguided and robotized vehicle (6) for handling and transporting containers or the like, characterized by
a first set of shelves (44) mounted on the front end of said vehicle (9) and a second set of shelves (44) mounted on the rear end of said vehicle, said first and second set of shelves (44) being spaced apart thereby providing a free space therebetween;
manipulator means (23) mounted on said vehicle (6) and located in said free space between said first and second set of shelves (44), said manipulator means including
two spaced apart vertically oriented columns (45), with each column having a top end and a bottom end, the bottom end of each column being mounted to the vehicle frame, and a beam (46) connected to the top end of each column (45);
a three dimensional frame (41) movably mounted on said columns for vertical movement along said columns, means (48) for vertically moving said three dimensional frame along said columns;
a rotary arm (42) hinged to said three dimensional frame (41) for rotation about a vertical axis, said hinged rotary arm (42) having a horizontally oriented longitudinal length, means for rotating said rotary arm about said vertical axis;
a horizontally oriented bar (55) having a longitudinal length movably mounted in said rotary arm (42) for longitudinal movement thereon;
a clamp assembly (56) movably mounted on said longitudinally oriented bar (53) for longitudinal movement thereon;
means (57) for causing longitudinal movement of said longitudinally oriented bar and said clamp (56) assembly;
said clamp (56) assembly including means (57) for lifting an article from a support without vertical movement of said three dimensional frame (41).

3. Assembly according claim 1, with an autoguided and robotized vehicle, characterized in that said clamp assembly (56) comprises
a horizontally oriented stiff three dimensional frame (41) mounted on said horizontally oriented bar (53);
a tilting frame (61) mounted on said stiff three dimensional frame (41) by two hinges (62) for permitting vertical tilting of said tilting frame with respect to said stiff three dimensional frame;
a tilting bar (63) mounted at a first location to said stiff three dimensional frame (41) and at a second location to said tilting frame (61), said second location being at a distance from the first location, means (64, 65) for varying the distance between said first location and said second location thereby causing tilting of said tilting frame (61) with respect to said stiff three dimensional frame (41);
two spaced apart symmetric longitudinal members (67) having a first end, a second end, and an intermediate portion, with the first end of each symmetric longitudinal member being shaped to support the container (5) being handled, each spaced apart symmetric longitudinal member (67) being mounted at its intermediate portion to respective opposite sides of said tilting frame (61) by a vertical hinge (68), two symmetric elongated bars (69), each having a first end and a second end, wherein the first end of each elongated bar (69) is connected by a rounded joint to a respective second end of one of said symmetric longitudinal members and the second end of each elongated bar is connected by a rounded joint to said stiff three dimensional frame (41);
whereby when said tilting frame (61) tilts vertically downward, said spaced apart symmetric longitudinal members (67) tilt vertically downward and move horizontally away from one another, and when said tilting frame tilts vertically upward said spaced apart symmetric longitudinal members (67) tilt vertically upward and move horizontally toward one another, and means (70) for communicating with the host computer (20) for detecting a container (5) to be taken or to be released by said clamp assembly (56).

4. Assembly according claim 1 having a system to measure distances travelled by the autoguided vehicle (6) in the work place (1), characterized by
at least one non-traction wheel (25) rotatably mounted on said vehicle (6) for rotation on the floor of the work place (1), said non-traction wheel being rotatable responsive to movement of the vehicle along the floor;
encoder means (36) mounted on said vehicle (6) for communicating with said non-traction wheel (25) for providing electronic pulses responsive to rotation of said non-traction wheel; and
means (37) mounted on said vehicle (6) communicating with said encoder means (36) for translating said pulses into distance travelled by said vehicle along said floor of the work place (1).

5. Assembly according claim 4, having a system to measure distance travelled by the autoguided vehicle (6) in the assembly, characterized that
at least one non-traction wheel (25) rotatably mounted on said vehicle (6) for rotation on the floor of the work place (1), said non-traction wheel (25) being rotatable responsive to movement of the vehicle along the floor;
a friction wheel (35) rotatably mounted on said vehicle (6) contacting said non-traction wheel (25), said friction wheel being rotatable responsive to rotation of said non-traction wheel;
encoder means mounted on said vehicle (6) communicating with said friction wheel (35) for providing electronic pulses responsive to rotation of said friction wheel;
means mounted on said vehicle communicating with said encoder means for translating said pulses into distance travelled by said vehicle (6) along said floor of the work place (1).

6. Assembly according claim 1, having an identification system for container (5) in the assembly, characterized by
reading means mounted on at least one work station (9) for reading a code (18) affixed to a container (5), said code comprising bright and dark areas, said reader means including infrared sensor means for identifying said bright and dark areas and means communicating with said sensor means for converting said sensed bright and darf areas into binary code;
said code including six adjacent areas selectively bright and dark representing a binary number code and said code further including two additional adjacent areas next to said six adjacent areas, said two additional adjacent areas being selectively bright and dark areas and providing a redundancy code;
said code (18) further including an identification area containing visual numerical identification (25) corresponding to the binary number represented by the six adjacent areas;
said redundancy code including two adjacent areas being selectively bright and dark to make odd a summation of respective three alternating areas of said six adjacent areas representing the binary number code;
said reading means operating to read said code by said code being present in front of said reading means whereby said reading means detects presence of the container (5) having said code affixed thereon.

## Patentansprüche

1. Anordnung für das programmgesteuerte Handhaben von Behältern (5) oder ähnl. auf der Bodenfläche einer Betriebsstelle (1), mit einem Hostrechner (20), einem Satz fahrerloser automatisierter Fahrzeuge (6), mehreren Behälteraufnahmestationen (9), ferner mit einem Kommunikationssystem zwecks Austauschs von Informationen zwischen dem Hostrechner (20), den Fahrzeugen (6) und den Behälteraufnahmestationen (9), wobei die Behälter (5) zum Instellungbringen an der jeweiligen Behälteraufnahmestation (9) eine im wesentlichen ebene horizontale Bodenfläche aufweisen sowie mit bordeigenen am Fahrzeug befindlichen, der Aufnahme der Behälter dienenden Auflagen (22), deren Auflageflächen im wesentlichen eben und horizontal verlaufen, und wobei jedes Fahrzeug eine rechte und eine linke Seitenfläche aufweist;
ein Manipulator (23) auf jedem Fahrzeug (6) zum Erfassen eines auf den bordeigenen Auflagen (22) befindlichen Behälters (5) und zum Transport des erfaßten Behälters an eine dem Fahrzeug benachbarte Behälteraufnahmestation (9) und zur Freigabe des erfaßten Behälters auf der externen Behälterauflagefläche (15) in der benachbarten Behälteraufnahmestation (9) und umgekehrt, wobei sich die Behälteraufnahmestation (9) jeweils auf einer Seite des Fahrzeuges befindet und deren dem Fahrzeug zugewandte Behälterauflagefläche in einer gegenüber der ebenen und horizontalen Auflagefläche an den fahrzeugfesten Auflagen in unterschiedlicher Höhe von der Bodenfläche der Betriebsstelle angeordnet ist, **dadurch gekennzeichnet, daß**
- jedes Fahrzeug (6) einen bordeigenen Rechner (37) zur Kommunikation mit dem Hostrechner (20) aufweist,
- daß mindestens eine Behälteraufnahmestation (9) einen Arbeitsplatz (1) bildet, der einen Annahmebereich (10) für vom Manipulator (22) des Fahrzeuges (6) herangeführte Behalter aufweist,
- daß erste Mittel (12) am Arbeitsplatz (1) zur Kommunikation mit dem Hostrechner (20) und zum Erkennen der Anwesenheit eines Behälters im Annahmebereich (10) vorgesehen sind, durch
- einen dem Arbeitplatz zugeordneten dem Aufnahmebereich benachbarten Arbeitsbereich (13), durch
- zweite Mittel (14) zur Kommunikation mit dem Hostrechner (20) und zum Erkennen der Anwesenheit eines Behälters im Arbeitsbereich (13) des Arbeitsplatzes (1), durch
- einen Abgabebereich (15) am Arbeitsplatz neben dem Arbeitsbereich, und durch
- dritte Mittel (17) zur Kommunikation mit dem Hostrechner (20) und zum Erkennen eines Behälters im Abgabebereich (15), die zudem Mittel zum Auslesen eines an jedem Behälter (5) angebrachten Identifizierungskodes (18) aufweisen.

2. Anordnung nach Anspruch 1 mit einem fahrerlosen automatisierten Fahrzeug (6) zur Handhabung und zum Transport von Behaltern und ähnl., **gekennzeichnet** durch
- einen ersten Satz Ablageflächen (44) an der Vorderseite des Fahrzeuges (9) und einem zweiten Satz Ablageflachen (44) an der Rückseite des Fahrzeuges, wobei die Satze beider Ablageflächen im Abstand zueinander und zwischen sich einen Freiraum bildend angeordnet sind,
- einen auf dem Fahrzeug (6) im Freiraum zwischen den ersten und zweiten Ablageflächen (44) angeordneten Manipulator (23) bestehend aus zwei senkrechten zueinander im Abstand angeordneten Säulen (45) mit jeweils einem oberen und einem unteren Ende, wobei das untere Ende jeder Säule mit dem Fahrzeugrahmen verbunden ist und die oberen Enden der Saulen (45) durch einen Quertrager (46) verbunden sind,
- einem dreidimensionalen und mit den Säulen zwecks Bewegens in der Senkrechten verbundenen Rahmen (41) und Mittel (48) zur senkrechten Bewegung des dreidimensionalen Rahmens an den Säulen; einem am dreidimensionalen Rahmen (41) gelagerten um eine senkrechte Achse bewegbaren Schwenkarm mit horizontaler Längserstreckung (42) und Mittel zum Drehen des Schwenkarms um die senkrechte Achse,
- eine horizontal verlaufende und auf dem Schwenkarm (42) langsverschieblich angeordnete Schiene (55) vorbestimmter Länge;
eine Klemmvorrichtung (56), die auf der horizontalen Schiene (55) längsverschieblich angeordnet ist;
- Mittel (57) zur Längsverschiebung der Schiene (55) und der Klemmvorrichtung (56), wobei
- der Klemmvorrichtung Mittel (67) zum Anheben eines Objektes von einer Auflagefläche ohne senkrechte Bewegung des dreidimensionalen Rahmens (41) zugeordnet sind.

3. Anordnung nach Anspruch 1 mit einem fahrerlosenautomatisierten Fahrzeug **gekennzeichnet** durch
- eine Klemmvorrichtung (56) mit einem horizontal angeordneten starren dreidimensionalen und auf der horizontalen Stange (53) vorgesehenen Rahmen (41),
- einen auf dem dreidimensionalen Rahmen über zwei Gelenke (62) montierten Schwenkrahmen (61) zwecks senkrechten Verschwenkens des Schwenkrahmens in Bezug auf den dreidimensionalen Rahmen,
- eine Achse (63), die an einem Punkt mit dem dreidimensionalen Rahmen (41) und an einem zweiten Punkt mit dem Schwenkrahmen (61) verbunden ist, wobei die beiden Verbindungspunkte im Abstand voneinander liegen, Mittel (64, 65) zum Einstellen des Abstandes zwischen den beiden Verbindungspunkten zwecks Auslösens der Schwenkbewegung des Schwenkrahmens (61) in Bezug auf den dreidimensionalen Rahmen (41);
- zwei im Abstand voneinander liegende symmetrische in Längsrichtung verlaufende Glieder (67) mit einem ersten und einem zweiten Ende und einem Mittelstück, wobei die Form des ersten Endes zwecks Aufnahme des zu handhabenden Behälters (5) an dessen Konfiguration angepaßt ist, wobei jedes Glied (67) mit seinem Mittelstück an jeweils gegenuberliegenden Seiten des Schwenkrahmens (61) durch ein senkrechtes Gelenk (68) angeordnet ist, mit zwei symmetrischen länglichen Stäben (69) mit jeweils einem ersten und einem zweiten Ende, wobei das erste Ende jedes Stabes (69) über ein abgerundetes Verbindungsstück mit jeweils einem zugeordneten zweiten Ende eines der symmetrischen länglichen Glieder verbunden ist und das zweite Ende jeweils über ein abgerundetes Stück mit dem dreidimensionalen Rahmen (41) verbunden ist, derart, daß
- beim senkrechten Verschwenken des Schwenkrahmens (61) nach unten die symmetrischen Glieder (67) senkrecht nach unten schwenken und sich in der Horizontalen voneinander wegbewegen, wogegen beim senkrechten Verschwenken des Rahmens nach oben die symmetrischen Glieder (67) senkrecht nach oben schwenken und sich in der Horizontalen aufeinander zu bewegen, und
- Mittel (70) vorgesehen sind, die mit dem Hostrechner (20) kommunizieren zwecks Erkennen eines von der Klemmvorrichtung (56) aufzunehmenden oder freizugebenden Behälters (5).

4. Anordnung nach Anspruch 1, mit einem System zur Messung des zurückgelegten Weges des fahrerlosen automatisierten Fahrzeuges (6) innerhalb der Betriebsstelle (1), **gekennzeichnet** durch
- mindestens ein nicht angetriebenes Rad (25) am Fahrzeug (6), mit Bodenkontakt an der Betriebsstelle, das durch die Fahrzeugbewegung am Boden in Drehung versetzt wird;
- durch einen, mit dem Rad (25) in Wirkverbindung stehenden Enkoder (36) am Fahrzeug (6), der der Drehung des Rades entsprechende elektronische Impulse abgibt und durch
- am Fahrzeug (6) vorgesehene, mit dem Enkoder (36) kommunizierende Mittel (37) zwecks Erzeugung von Impulsen, die den vom Fahrzeug auf dem Boden der Betriebsstelle (1) zurückgelegten Wegstrecken entsprechen.

5. Anordnung nach Anspruch 4 mit einer Vorrichtung zur Messung des vom fahrerlosen automatisierten Fahrzeugs (6) in der Betriebsstelle zurückgelegten Weges, **gekennzeichnet** durch
- mindestens ein nicht angetriebenes Rad (25) am Fahrzeug (6), das Bodenkontakt an der Betriebsstelle aufweist und durch die Fahrzeugbewegung am Boden in Drehung versetzt wird; durch
- ein am Fahrzeug (6) drehbar angeordnetes und mit dem nicht angetriebenen Rad (25) in Wirkverbindung stehendes, mit der Drehung des Rades (25) mitdrehendes Reibrad (35); durch
- einen Enkoder (36) am Fahrzeug (6), der mit dem Reibrad (35) in Wirkverbindung steht zur Erzeugung von mit der Drehung des Reibrades korrespondierenden elektronischen Impulsen; und durch
- am Fahrzeug angeordnete, dem Enkoder zugeordnete Mittel zwecks Umwandlung der Impulse in die vom Fahrzeug (6) auf dem Boden der Betriebsstelle (1) zurückgelegten Wegstrecken verkörpernde Signale.

6. Anordnung nach Anspruch 1, mit einer Identifizierungsvorrichtung für die in der Anordnung befindlichen Behälter (5), **gekennzeichnet** durch
- eine Lesevorrichtung an mindestens einem Arbeitsplatz (9) zum Auslesen eines am Behälter (5) aufgebrachten und aus hellen und dunklen Feldern bestehenden Kodes (18), wobei zur Identifizierung von hellen und dunklen Feldern IR-Sensoren und mit diesen Sensoren in Wirkverbindung stehende Mittel zwecks Umwandlung der erkannten hellen und dunklen Felder in Binärkodes vorgesehen sind; durch
- sechs aufeinanderfolgende abwechselnd helle und dunkle, eine binäre Kodezahl darstellende Felder im Kode (18), welcher zudem zwei weitere an die sechs nebeneinanderliegende Felder anschließende Felder aufweist, die ebenfalls hell bzw. dunkel sind und einen redundanten Kode bilden, wobei
- der Kode (18) ferner ein Identifizierungsfeld mit einer numerischen Identifizierung (25) aufweist, die der durch die nebeneinanderliegenden Felder gebildeten Binärzahl entspricht; und wobei ferner
- der redundante Kode zwei nebeneinanderliegende abwechselnd helle bzw. dunkle Felder beinhaltet, derart, daß die Summe von drei alternierenden Feldern der sechs nebeneinanderliegenden, die binäre Kodezahl verkörpernden Feldern ungerade ist; die alles in derartiger Anordnung, daß
- die Lesevorrichtung den jeweils unmittelbar vor ihr liegenden Kode ausliest zwecks Ermittlung der Anwesenheit eines diesen Kode tragenden Behälters (5).

## Revendications

1. Ensemble pour la manipulation, sous la commande d'un programme, de conteneurs (5) ou d'articles similaires en un emplacement de travail (1) comportant un sol, comprenant un ordinateur hôte (20), un ensemble de véhicules autoguidés et robotisés (6), une pluralité de postes (9) de réception des conteneurs situés sur le sol de l'emplacement de travail et un système de communication pour établir une communication entre l'ordinateur hôte (20), les véhicules (6) et les postes (9) de réception des conteneurs, chaque poste 9) de réception des conteneurs présentant une surface support sensiblement plane et horizontale pour la mise en place des conteneurs, comprenant en outre un support de conteneurs embarqué (22) monté sur chaque véhicule (6), chaque support embarqué (22) présentant une surface sensiblement plane et horizontale pour supporter les conteneurs, chaque véhicule ayant un côté latéral droit et un côté latéral gauche, un moyen manipulateur (23) monté sur chaque véhicule (6) pour saisir un conteneur (5) placé sur le support embarqué (22), pour transporter le conteneur saisi vers un poste (9) de réception des conteneurs voisin du véhicule et pour libérer le conteneur saisi sur le support de conteneur externe du poste voisin (9) de réception des conteneurs et vice versa, le poste (9) de réception des conteneurs étant voisin de l'un ou l'autre des côtés latéraux du véhicule, la surface plane et horizontale, formant support de conteneur, du poste de réception des conteneurs voisin du véhicule (6) étant à une hauteur, par rapport au sol de l'emplacement de travail (1), qui est différente de la hauteur de la surface support plane et horizontale du support de conteneur embarqué du véhicule, caractérisé en ce que sur chaque véhicule (6) est monté un ordinateur embarqué (37) destiné à communiquer avec l'ordinateur hôte (20), au moins un poste (9) de réception des conteneurs est un poste de travail ayant une zone de réception (10) pour recevoir un conteneur à partir du moyen manipulateur (22) monté sur le véhicule (6), il comprend un premier moyen (12) pour communiquer avec l'ordinateur hôte (20) monté à l'emplacement de travail (1) et pour détecter un conteneur déposé sur la zone de réception (10), une zone de travail (13) située dans le poste de travail (9) au voisinage de la zone de réception, un second moyen (14) pour communiquer avec l'ordinateur hôte (20) et pour détecter un conteneur présent dans la zone de travail (13), une zone de sortie (15) se trouvant dans le poste de travail au voisinage de la zone de travail, un troisième moyen (17) pour communiquer avec l'ordinateur hôte (20) et pour détecter un conteneur se trouvant dans la zone de sortie (15), ce troisième moyen comportant un moyen pour lire un code d'identification (8) fixé à chaque conteneur (5).

2. Ensemble suivant la revendication 1 comportant un véhicule autoguidé et robotisé (6) pour la manipulation et le transport de conteneurs ou d'articles similaires, caractérisé en ce qu'il comprend un premier ensemble d'étagères (44) montées sur la partie avant du véhicule (6) et un second ensemble d'étagères (44) montées sur la partie arrière de ce véhicule, ces premier et second ensembles d'étagères (44) étant espacés l'un de l'autre en délimitant un espace libre entre eux, le moyen manipulateur (23) monté sur le véhicule (6) est logé dans l'espace libre entre les premier et second ensembles d'étagères (44), ce moyen manipulateur comportant deux colonnes (45) s'étendant verticalement et espacées l'une de l'autre, chaque colonne ayant une extrémité supérieure et une extrémité inférieure, l'extrémité inférieure de chaque colonne étant montée sur le châssis du véhicule, et une poutre (46) reliée à l'extrémité supérieure de chaque colonne (45) un châssis à trois dimensions (41) monté mobile sur les colonnes de manière à pouvoir se déplacer verticalement le long de ces colonnes, un moyen (48) pour déplacer verticalement le châssis à trois dimensions le long des colonnes, un bras rotatif (42) qui est articulé sur le châssis à trois dimensions (41) de manière à pouvoir tourner autour d'un axe vertical, ce bras rotatif articulé (42) ayant un tronçon longitudinal orienté horizontalement, un moyen pour faire tourner le bras rotatif autour de l'axe vertical, une barre (55) orientée horizontalement, ayant un tronçon longitudinal monté mobile dans le bras rotatif (42), de manière à pouvoir se déplacer longitudinalement sur ce bras, un ensemble de pince (56) monté mobile sur la barre (53) orientée longitudinalement, de manière à pouvoir se déplacer longitudinalement sur cette barre, un moyen (57) pour provoquer le mouvement longitudinal de la barre orientée longitudinalement et de l'ensemble de pince (56), cet ensemble de pince (56) comportant un moyen (57) pour soulever un article à partir d'un support, sans mouvement vertical du châssis à trois dimensions (41).

3. Ensemble suivant la revendication 1, avec un véhicule autoguidé et robotisé, caractérisé en ce que l'ensemble de pince (56) comprend un châssis rigide à trois dimensions (41) orienté horizontalement, monté sur la barre (53) orientée horizontalement, un châssis basculant (61) monté sur le châssis rigide à trois dimensions (41) par l'intermédiaire de deux articulations (62), afin de permettre un basculement vertical du châssis basculant par rapport au châssis rigide à trois dimensions, une barre basculante (63) montée, en un premier emplacement, sur le châssis rigide à trois dimensions (41) et, en un second emplacement, sur le châssis basculant (61), ce second emplacement étant situé à distance du premier emplacement, des moyens (64,65) pour faire varier la distance entre le premier emplacement et le second emplacement, en provoquant ainsi le basculement du châssis basculant (61) par rapport au châssis rigide à trois dimensions (41), deux éléments longitudinaux et symétriques (67), espacés l'un de l'autre, ayant une première extrémité, une seconde extrémité et une portion intermédiaire, la première extrémité de chaque élément longitudinal symétrique étant conformée de manière à supporter le conteneur (5) qui est en train d'être manipulé, chacun des éléments longitudinaux symétriques (67), espacés l'un de l'autre, étant monté, à l'endroit de sa portion intermédiaire, sur des côtés opposés respectifs du châssis basculant (61), par l'intermédiaire d'une articulation verticale (68), deux barres allongées symétriques (69) ayant chacune une première extrémité et une seconde extrémité, la première extrémité de chaque barre allongée (69) étant reliée, par l'intermédiaire d'un joint sphérique, à une seconde extrémité respective de l'un des éléments longitudinaux symétriques tandis que la seconde extrémité de chaque barre allongée est reliée, par l'intermédiaire d'un joint sphérique, au châssis rigide à trois dimensions (41), si bien que, lorsque le châssis basculant (61) bascule verticalement vers le bas, les éléments longitudinaux symétriques (67), espacés l'un de l'autre, basculent verticalement vers le bas et s'écartent l'un de l'autre dans le sens horizontal, et que, lorsque le châssis basculant bascule verticalement vers le haut, les éléments longitudinaux symétriques (67), espacés l'un de l'autre, basculent verticalement vers le haut et se déplacent horizontalement l'un vers l'autre, et un moyen (70) de communication avec l'ordinateur hôte (20) afin de détecter un conteneur (5) devant être saisi par l'ensemble de pince (56) ou libéré par cet ensemble.

4. Ensemble suivant la revendication 1 comportant un système pour mesurer les distances parcourues par le véhicule autoguidé (6) sur l'emplacement de travail, caractérisé en ce qu'au moins une roue non motrice (25) est montée à rotation sur le véhicule (6) pour rouler sur le sol de l'emplacement de travail (1), cette roue non motrice pouvant être entraînée en rotation à la suite du mouvement du véhicule sur le sol, un moyen codeur (36) est monté sur le véhicule (6) pour communiquer avec la roue non motrice (25), afin de produire des impulsions électroniques en réponse à la rotation de cette roue non motrice, et un moyen (37) est monté sur le véhicule (6) pour communiquer avec le moyen codeur (36), afin de traduire les impulsions en distance parcourues par le véhicule sur le sol de l'emplacement de travail (1).

5. Ensemble suivant la revendication 4 comportant un système pour mesurer les distances parcourues par le véhicule autoguidé (6) dans l'ensemble, caractérisé en ce qu'au moins une roue non motrice (25) est montée à rotation sur le véhicule (6) pour rouler sur le sol de l'emplacement de travail (1), cette roue non motrice pouvant être entraînée en rotation à la suite du mouvement du véhicule sur le sol, une roulette de frottement (35) est montée à rotation sur le véhicule (6) en étant en contact avec la roue non motrice (25), cette roulette de frottement étant entraînée en rotation par suite de la rotation de la roue non motrice, un moyen codeur, monté sur le véhicule, communique avec la roulette de frottement (35) de manière à produire des impulsions électroniques en réponse à la rotation de la roulette de frottement, et un moyen monté sur le véhicule communique avec le moyen codeur afin de traduire les impulsions en distance parcourue par le véhicule (6) sur le sol de l'emplacement de travail (1).

6. Ensemble suivant la revendication 1, comportant un système d'identification pour le conteneur (5) dans l'ensemble, caractérisé en ce qu'il comporte un moyen de lecture monté sur l'un au moins des postes de travail (9), pour lire un code (18) fixé à un conteneur (5), ce code comprenant des zones claires et sombres, ce moyen de lecture comportent un capteur à rayonnement infra-rouge pour identifier les zones claires et sombres et un moyen communiquant avec le capteur pour convertir les zones claires et sombres détectées en un code binaire, ce code comportant six zones adjacentes sélectivement claires et sombres représentant un nombre en code binaire et ce code comportant en outre deux zones adjacentes additionnelles voisines des six zones adjacentes, ces deux zones adjacentes additionnelles étant des zones sélectivement claires et sombres et fournissant un code de redondance, ce code (18) comportant en outre une zone d'identification contenant une identification numérique visuelle (25) correspondant au nombre binaire représenté par les six zones adjacentes, le code de redondance comportant deux zones adjacentes qui sont sélectivement claires et sombres, afin de rendre impair une somme de trois zones alternées respectives parmi les six zones adjacentes représentant le nombre en code binaire, le moyen de lecture intervenant pour lire le code du fait que ce code est présent devant le moyen de lecture si bien que ce moyen de lecture détecte la présence du conteneur (5) sur lequel est fixé le code.
